# EUROPÄISCHE PATENTSCHRIFT

(11) **EP 1 231 315 B1**
(45) Veröffentlichungstag und Bekanntmachung des Hinweises auf die Patenterteilung: **12.11.2003**
(21) Anmeldenummer: 02002025.1
(22) Anmeldetag: 07.02.2002
(51) Int. Cl.: D06F 75/18, F16K 7/06

(54) **Thermisch gesteuerte Einrichtung zur Betätigung einer Ventilöffnung, insbesondere eines Flüssigkeitsventils**
Thermally controlled device for actuating a valve opening , in particular of a valve for liquid fluids
Appareil activé thermiquement pour la mise en action de l'ouverture d'une vanne, en particulier d'une vanne pour liquides

(30) Priorität: 10.02.2001 DE 10106141
(43) Veröffentlichungstag der Anmeldung: 14.08.2002
(73) Patentinhaber: INTER CONTROL Hermann Köhler Elektrik GmbH u. Co. KG, D-90411 Nürnberg (DE)
(72) Erfinder: Pahlke, Lutz, 90469 Nürnberg (DE); Trapp, Stefan, 90449 Nürnberg (DE)
(74) Vertreter: Hafner, Dieter, Dr. Dipl.-Phys.

(56) Entgegenhaltungen:
- DE-C- 19 645 102
- US-A- 2 990 154
- US-A- 4 025 042

## Beschreibung

Die Erfindung betrifft eine thermisch gesteuerte Einrichtung zur Betätigung einer Ventilöffnung. Insbesondere ist das Gebiet der Flüssigkeitsventile angesprochen, dabei insbesondere sog. Drip-Stop-Ventile, wie sie in Dampfbügeleisen zur Anwendung gelangen. Die thermisch gesteuerte Einrichtung weist eine Bimetallsprungscheibe auf, die bei Erreichen einer Sprungtemperatur ihre Wölbstellung ändert und dabei mit ihrem Scheibenrand oder Randbereich eine Ventilöffnung schließt oder öffnet.

Eine derartige Vorrichtung ist aus DE 196 45 102 C 1 bekannt. Dort wirkt eine Bimetallsprungscheibe, die an einem Trägerelement befestigt ist, mit einem daran angeordneten Übertragungshebel auf eine Schließeinrichtung eines Ventils ein. Die bekannte thermisch gesteuerte Einrichtung hat sich zwar als sicher und funktionsfähig erwiesen, ist jedoch nachteilig, was ihren Einbau und ihre Justierung im Zusammenspiel mit weiteren Ventilelementen anbelangt.

Der Erfindung liegt die Aufgabe zugrunde, eine thermisch gesteuerte Einrichtung zur Betätigung einer Ventilöffnung derart auszubilden, daß sie nur wenige Funktionsteile aufweist, zu einer sicheren Abdichtung des Ventils führt und auf einfache Weise zu montieren ist. Diese Aufgabe wird durch die kennzeichnenden Merkmale des Patentanspruches 1 gelöst. Vorteilhafte Weiterbildungen der Erfindung ergeben sich aus den Unteransprüchen 2 - 20.

Die Erfindung sieht vor, daß die Ventilöffnung durch einen querschnittsveränderbaren Abschnitt eines schlauch- oder rohrartigen Durchflußelementes gebildet wird und der Rand oder Randbereich der Bimetallsprungscheibe den querschnittsveränderbaren Abschnitt unmittelbar beaufschlagt.

In vorteilhafter Weise kommt damit die Einrichtung ohne weitere Zwischenelemente aus, wodurch die Anzahl der Funktionsteile reduziert ist. Grundsätzlich ist es möglich, die Einrichtung aus nur drei Teilen bestehen zu lassen, nämlich Bimetallsprungscheibe, Trägerelement und Durchflußelement. Wenn die Bimetallsprungscheibe kreisförmig ausgebildet ist, und das schlauch- oder rohrartige Durchflußelement die Kreisfläche schneidet, wird im Randbereich der Bimetallsprungscheibe in vorteilhafter Weise eine Doppeldichtung gebildet, wodurch eine besonders hohe Ventildichte gewährleistet ist.

In vorteilhafter Weise kann als Durchflußelement ein dauerelastischer Schlauch oder ein dauerelastisches Formteil herangezogen werden, beispielsweise ein weicher Silikonschlauch, der durch die zur Verfügung stehenden Kräfte der Bimetallsprungscheibe querschnittsverändernd komprimierbar ist. Das Durchflußelement verläuft zwischen der Bimetallsprungscheibe und dem Trägerelement, so daß das Trägerelement eine Mehrfachfunktion hat, nämlich eine Haltefunktion hinsichtlich des Durchflußelementes und der Bimetallsprungscheibe und eine Gegendruckfunktion, da sich das Durchflußelement bei Komprimierung durch die Bimetallsprungscheibenränder an dem Trägerelement abstützen kann.

Das Trägerelement besteht in vorteilhafter Weise aus einer Trägerplatte, die im wesentlichen parallel zur Erstreckungsebene der Bimetallsprungscheibe verläuft. Die Trägerplatte dient zusätzlich zur Wärmeeinleitung in die Bimetallsprungscheibe. Darüber hinaus kann ein plattenartiges Element auf einfache Weise z. B. im Innenbereich der Sohle eines Bügeleisens befestigt werden, wenn die Einrichtung die Funktion eines Drip-Stop-Ventils übernehmen soll. Dabei wird das Zentrum der Bimetallsprungscheibe an der Trägerplatte befestigt, die im Befestigungsbereich etwas erhaben ausgebildet ist.

Die Befestigung der Trägerplatte, z. B. auf der Sohle eines Dampfbügeleisens kann mittels eines Niets oder Bolzens, das/der das Zentrum der Trägerplatte sowie Bimetallsprungscheibe durchsetzt und in die Oberseite der Sohle eingreift.

Das Trägerelement kann entweder gesondert ausgeführt sein oder in die Oberseite der Sohle eines Bügeleisens oder einer Dampfkammer integriert sein, so daß die thermisch gesteuerte Einrichtung sicher in ihrer Lage stabilisiert ist. Zweckmäßigerweise kann die Oberseite der Sohle eines Bügeleisens oder einer Dampfkammer als Trägerelement vorgesehen sein, womit sich die Anzahl der Funktionsteile nochmals reduziert.

Die Bimetallsprungscheibe ist meist ein Stanzteil, so daß sie eine gratbehaftete und eine gratfreie Seite aufweist, wobei die gratfreie Seite zweckmäßigerweise das Durchflußelement beaufschlagen kann. Dadurch wird verhindert, daß das Durchflußelement nur linienförmig über den Grat beaufschlagt wird und an dieser Stelle zu sehr beansprucht wird.

Zur Erhöhung der Abdichtung kann das Trägerelement abstehende Rippen aufweisen, die den querschnittsveränderbaren Abschnitt des Durchflußelementes unmittelbar beaufschlagen. Bei entsprechender Stellung der Bimetallsprungscheibe erfolgt eine flächige Beaufschlagung der Schlauchoberseite durch die Unterseite der Bimetallsprungscheibe, so daß der Schlauch auf die Dichtrippen gedrückt wird, die von unten nach oben gegen den Schlauch hervorstehen. Damit es zu einer sauberen und dauerhaften Dichtung kommt, können die Rippen der Bimetallsprungscheibe im wesentlichen parallel zum das Durchflußelement beaufschlagenden Rand der Bimetallsprungscheibe angeordnet sein. Zusätzlich können die Rippen dem Randverlauf der Bimetallsprungscheibe folgen und dadurch in zweckmäßigerweise die Dichtwirkung des Randes der Bimetallsprungscheibe erhöhen.

Ferner können die Rippen bezogen auf den Rand der Bimetallsprungscheibe radial nach innen versetzt sein, um die flächige Beaufschlagung in optimaler Weise zu gewährleisten.

In einer vorteilhaften Ausführungsvariante kann das Durchflußelement zumindest im Bereich des querschnittsveränderbaren Abschnitts in die Oberseite der Bügeleisensohle oder der Dampfkammer eintreten. Das Durchflußelement ist damit vor äußeren, z. B. thermischen oder mechanischen Einwirkungen geschützt. Vorteilhafterweise liegt dazu das Durchflußelement zumindest im Bereich des querschnittsveränderbaren Abschnitts in einem Schlauchführungselement ein, das z. B. als rinnenartige Eindellung oder Einziehung oder Einkerbung ausgebildet ist. Durch diese konstruktive Maßnahme kann das Durchflußelement nicht seitlich unter der Scheibe herauswandern und bleibt in seiner Lage stabilisiert.

Auch dieses Schlauchführungselement kann mindestens eine Rippe zur unmittelbaren Beaufschlagung des querschnittsveränderbaren Abschnitts des Durchflußelementes aufweisen. Auch diese Dichtrippen sind zweckmäßigerweise so angeordnet, daß eine linienartige Dichtung von unten gewährleistet wird.

In einer weiteren vorteilhaften Ausführungsvariante kann das Trägerelement ein Übergangselement aufweisen, in das das Durchflußelement übergeht. Dazu kann z. B. die Trägerplatte bzw. das Trägerelement als Formteil aus Kunststoff ausgebildet sein, welches mit einem in die Dampfkammer hineinreichenden Stützen versehen ist, der dann in den Schlauch übergeht oder mit einem Schlauchabschnitt einstückig ausgebildet ist.

Das Trägerelement ist um den Rand der Bimetallsprungscheibe herumgebogen, insbesondere winklig abgebogen, so daß das Durchflußelement, insbesondere der Schlauch zwischen dem zentralen Befestigungsbereich der Bimetallsprungscheibe auf dem Trägerelement und dem abgebogenen Abschnitt des Trägerelementes gehaltert ist und sich aus dem Beaufschlagungsbereich der Bimetallsprungscheibe nicht unabsichtlich lösen kann.

Der dem Durchflußelement gegenüberliegende Randbereich der Bimetallsprungscheibe ist durch eine weitere Abbiegung des Trägerelementes abgestützt, wodurch sich besonders vorteilhafte Kräfteverhältnisse zur Ausübung auf das Durchflußelement ergeben. Die Aufbiegungshöhe entspricht etwa der Stärke des durch den Bimetallsprungscheibenrand komprimierten Durchflußelementes. Die Höhe der Aufbiegung wird im wesentlichen von der Sprungcharakteristik der Bimetallsprungscheibe bestimmt.

Mit besonderem Vorteil kann das Trägerelement federnd so ausgebildet sein, daß es der Bewegung der Bimetallsprungscheibe über einen gewissen Federweg folgt. Dadurch wird die Schließbewegung langhubiger. Außerdem werden allzu hohe Preßkräfte auf den empfindlichen Silikonschlauch abgefedert oder abgedämpft. Ein derartig langhubiges Element läßt sich außerdem leichter justieren.

Der erhabene Mittelbereich des Trägerelementes wird durch eine Ausprägung gebildet, wodurch weitere Teile eingespart werden können. Das Zentrum der Ausprägung ist mit einer einstückigen Ausbördelung versehen, die eine zentrale Befestigungsausnehmung der Bimetallsprungscheibe durchgreift, so daß auch ein gesondertes Befestigungselement entfallen kann.

Die Bimetallsprungscheibe kann unmittelbar thermisch angekoppelt auf einem wärmeübertragendem Trägerelement angeordnet sein. Dabei ist es möglich, daß das Trägerelement als Wärmeleitplatte ausgebildet ist. Das Trägerelement kann auch domartig ausgebildet sein, wobei daran ein Abstützelement für die Bimetallsprungscheibe vorgesehen sein kann. Der Vorteil daran ist der, daß das Abstützelement nicht so sehr aufgeheizt wird, sondern der Wärmefluß von der Dampfkammeroberseite über den Dom sehr schnell in die Bimetallsprungscheibe hineingeht. Das domartige Trägerelement kann das Abstützelement z. B. in einer Einschnürung tragen.

Das wärmeleitende Trägerelement kann auch als Trägerbolzen oder Niet ausgebildet sein und dadurch in einfacher Weise hergestellt und an die Bimetallsprungscheibe montiert werden. Dazu steht vorteilhafterweise das Trägerelement direkt mit der beheizten Sohle bzw. mit der Dampfkammer thermisch in Verbindung, wobei das Trägerelement die Oberseite der Sohle bzw. der Dampfkammer durchsetzt.

Im geöffneten Zustand haben die vom Bimetallsprungscheibenrand beaufschlagten Dichtstellen des Durchflußelementes einen ovalen Querschnitt.

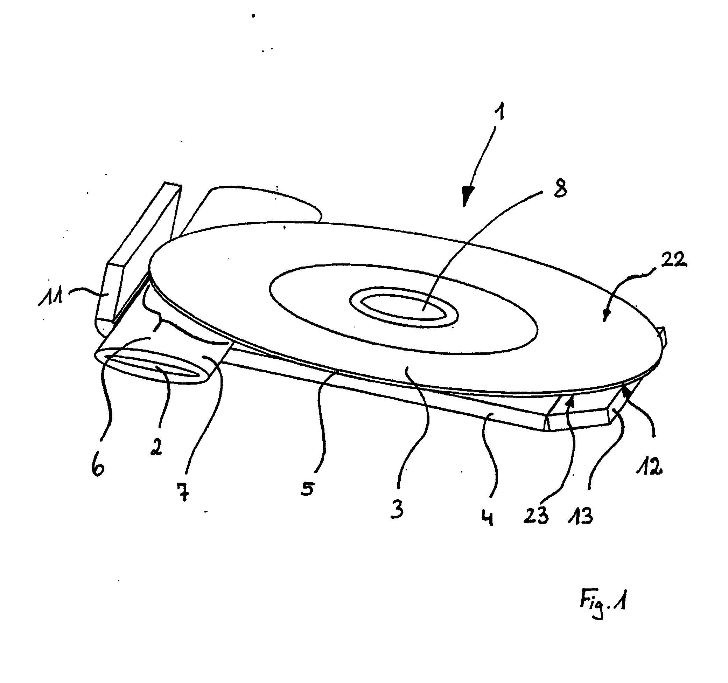

Die Erfindung ist anhand von vorteilhaften Ausführungsbeispielen in den Zeichnungsfiguren näher erläutert. Diese zeigen
- Fig. 1: eine perspektivische Ansicht einer thermisch gesteuerten Einrichtung in geöffnetem Zustand;
- Fig. 2: eine Draufsicht auf eine thermisch gesteuerte Einrichtung gemäß Fig. 1;

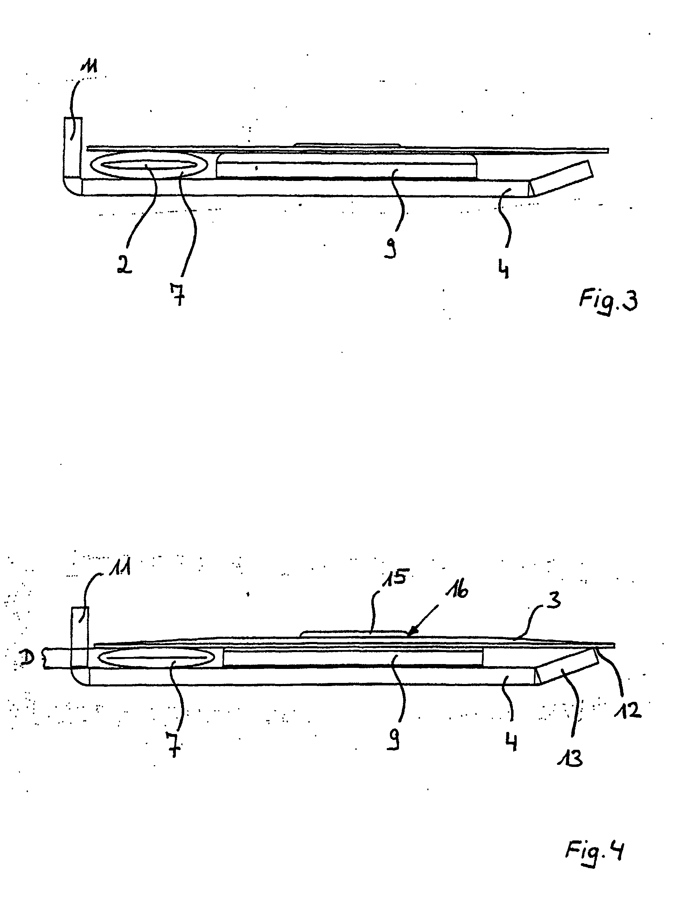

- Fig. 3: eine Seitenansicht einer Einrichtung gemäß Fig. 1 in geöffnetem Zustand;
- Fig. 4: eine Einrichtung gemäß Fig. 3 in geschlossenem Zustand;
- Fig. 5: eine Unteransicht auf eine alternative Ausführungsform einer thermisch gesteuerten Einrichtung;

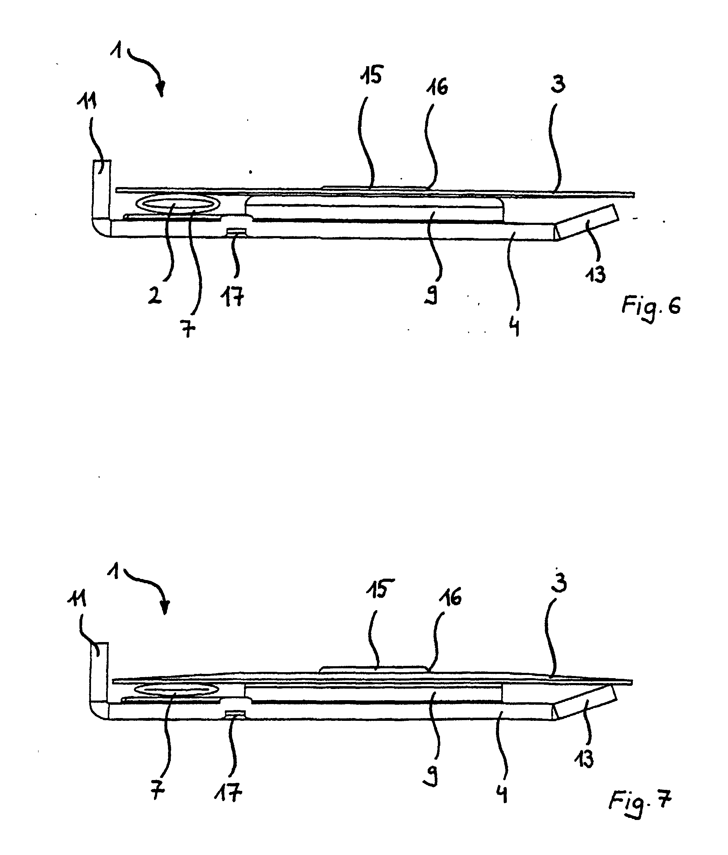

- Fig. 6: eine Seitenansicht der Einrichtung gemäß Fig. 5 in geöffnetem Zustand;
- Fig. 7: eine Einrichtung gemäß Fig. 6 in geschlossenem Zustand;
- Fig. 8: eine Seitenansicht einer thermisch gesteuerten Einrichtung im in eine Bügeleisensohle eingebauten Zustand sowie einer geöffneten Ventilöffnung;
- Fig. 9: eine Seitenansicht der Einrichtung gemäß Fig. 8 mit einer geschlossenen Ventilöffnung;
- Fig. 10: eine perspektivische Darstellung einer Bügeleisensohle mit einer integrierten thermisch gesteuerten Einrichtung;
- Fig. 11: eine vergrößerte Darstellung eines Ausschnittes aus Fig. 10;
- Fig. 12: eine perspektivische Darstellung einer Bügeleisensohle mit einer alternativen Ausführungsform einer integrierten thermisch gesteuerten Einrichtung sowie
- Fig. 13: eine vergrößerte Darstellung eines Ausschnittes aus Fig. 12.

Die thermisch gesteuerte Einrichtung 1 zur Betätigung einer Ventilöffnung 2 weist eine Bimetallsprungscheibe 3 auf, die an einem Trägerelement 4 befestigt ist und deren Scheibenrand 5 abhängig von der Wölbstellung die Ventilöffnung 2 schließt oder öffnet. Die Ventilöffnung 2 wird durch einen querschnittsveränderbaren Abschnitt 6 eines schlauchartigen Durchflußelementes 7 gebildet, wobei der Rand 5 der Bimetallsprungscheibe 3 den querschnittsveränderbaren Abschnitt 6 unmittelbar beaufschlagt. Das Durchflußelement 7 ist beim dargestellten Ausführungsbeispiel ein dauerelastischer Schlauch, insbesondere ein Silikonschlauch. Das Durchflußelement 7 ist zwischen der Bimetallsprungscheibe 3 und dem Trägerelement 4 eingeklemmt, das Trägerelement 4 besteht aus einer Trägerplatte, die sich im wesentlichen parallel zur Bimetallsprungscheibe 3 erstreckt. Die Bimetallsprungscheibe 3 ist mit ihrem Zentrum 8 an dem Trägerelement 4 befestigt, wozu ein erhabener Abschnitt 9 aus dem Trägerelement 4 ausgeprägt ist.

Die Bimetallsprungscheibe 3 ist als Stanzteil gefertigt und weist demnach eine gratbehaftet Seite 22 sowie eine gratfreie Seite 23 auf, wobei das Durchflußelement 7 mit der gratfreien Seite 23 beaufschlagt wird.

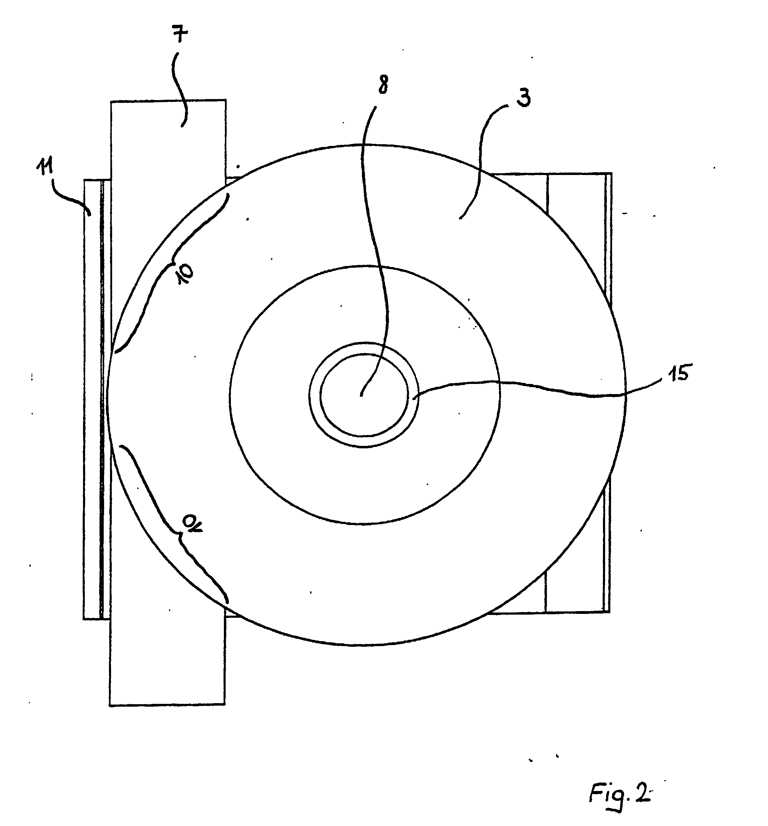

Das Durchflußelement 7 wird durch den Rand 5 der Bimetallsprungscheibe 3 in Durchflußrichtung zweimal hintereinander beaufschlagt, wodurch hintereinanderliegende Dichtbereiche gebildet werden. Die Beaufschlagung des Durchflußelementes 7 durch den Rand 5 der Bimetallsprungscheibe 3 erfolgt entlang von zwei Kreissegmenten 10, wie sich insbesondere aus der Draufsicht gemäß Fig. 2 ergibt.

Das Trägerelement 4 ist um den Rand 5 der Bimetallsprungscheibe 3 herumgebogen, das Durchflußelement 7 grenzt an die gebildete Abbiegung 11 des Trägerelementes 4 an. Die Lage des Durchflußelementes 7 bezogen auf die Bimetallsprungscheibe 3 und das Trägerelement 4 wird durch die Abbiegung 11 einerseits und die Ausprägung 9 definiert.

Der dem Durchflußelement 7 gegenüberliegende Randbereich 12 der Bimetallsprungscheibe 3 wird durch eine Aufbiegung 13 des Trägerelementes 4 abgestützt. Die Höhe der Aufbiegung 13 entspricht etwa der Stärke D des durch den Rand der Bimetallsprungscheibe komprimierten Durchflußelementes.

Das Zentrum der Ausprägung 9 ist mit einer einstückigen Ausbördelung 15 versehen, die eine zentrale Befestigungsausnehmung 16 der Bimetallsprungscheibe 3 durchgreift.

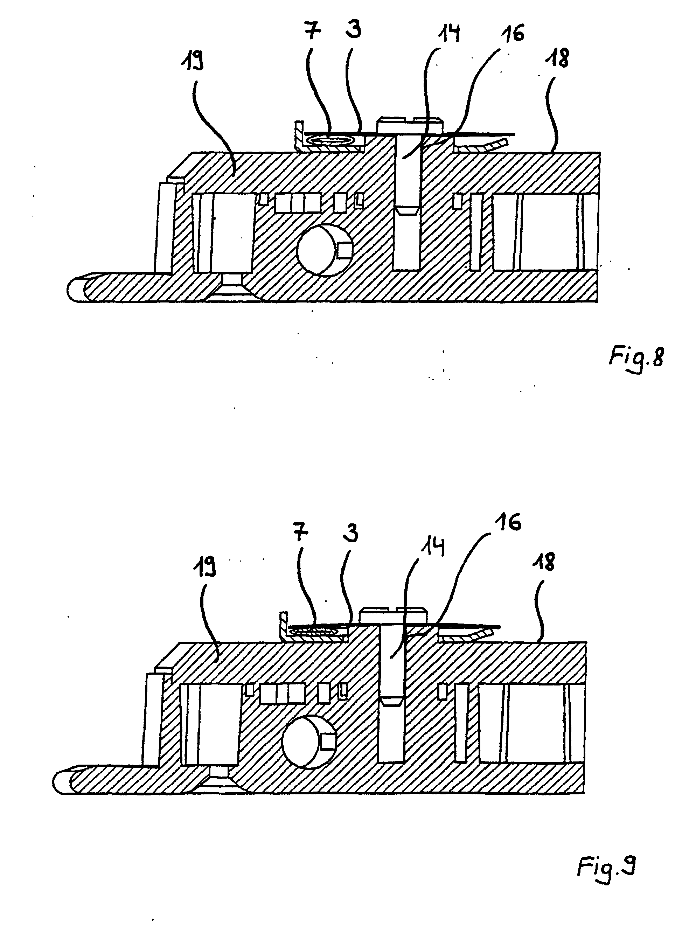

Das Trägerelement 4 kann in einer zweckmäßigen alternativen Ausgestaltung in die Oberseite 18 der Sohle 19 eines Bügeleisens oder einer Dampfkammer integriert sein. Wie insbesondere aus den Figuren 8 - 13 hervorgeht, stellt die Oberseite 18 der Sohle 19 eines Bügeleisens gleichzeitig das Trägerelement dar.

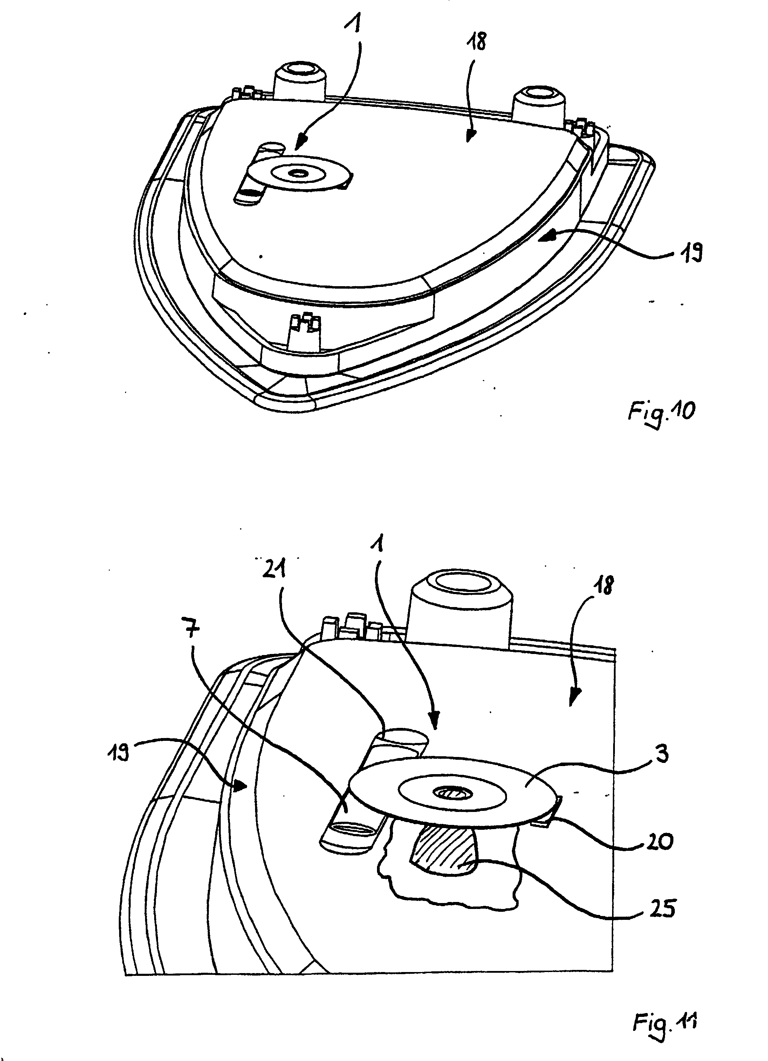

Die Figuren 8 und 9 verdeutlichen eine Möglichkeit der Befestigung der thermisch gesteuerten Einrichtung 1 mittels eines Nietes 26, der die Befestigungausnehmung 16 durchsetzt und in die Bügeleisensohle 19 eingreift. Das Trägerelement 4 wird zumindest teilweise von der Oberseite 18 der Bügeleisensohle 19 gebildet.

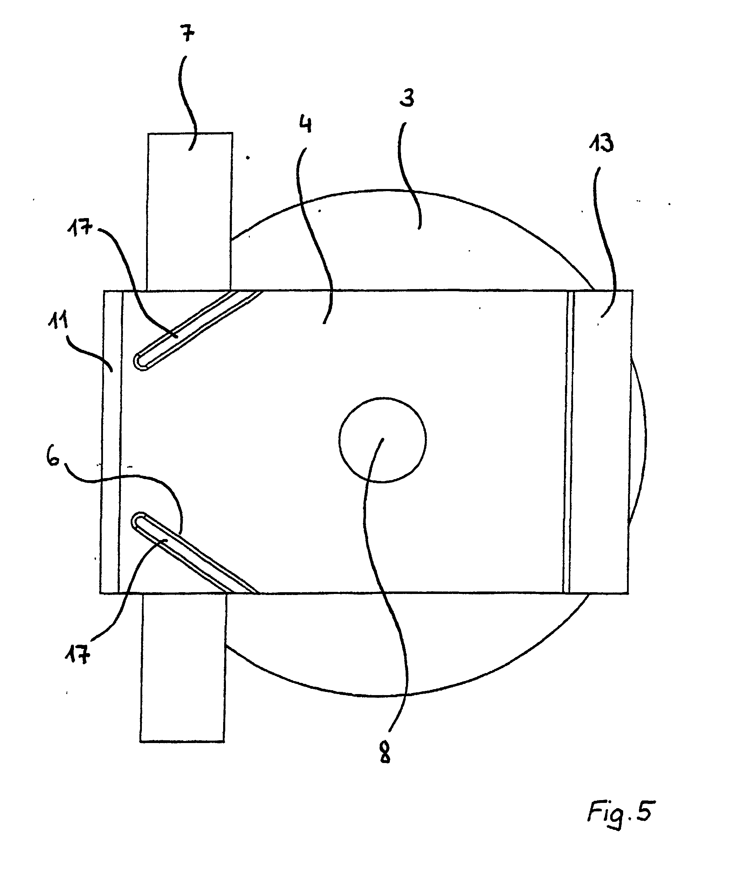

Die in Fig. 5 dargestellte Ausführungsvariante der thermisch gesteuerten Einrichtung 1 zeichnet sich dadurch aus, daß das Trägerelement 4 abstehende Rippen 17 zur unmittelbaren Beaufschlagung des querschnittsveränderbaren Abschnitts 6 aufweist. Die Rippen 17 sind im wesentlichen parallel zum das Durchflußelement 7 beaufschlagenden Rand 5 der Bimetallsprungscheibe 3 angeordnet. Durch die Rippen 17 werden zwei linienartige Dichtungen geschaffen, die eine sichere und dauerhafte Abdichtung gewährleisten.

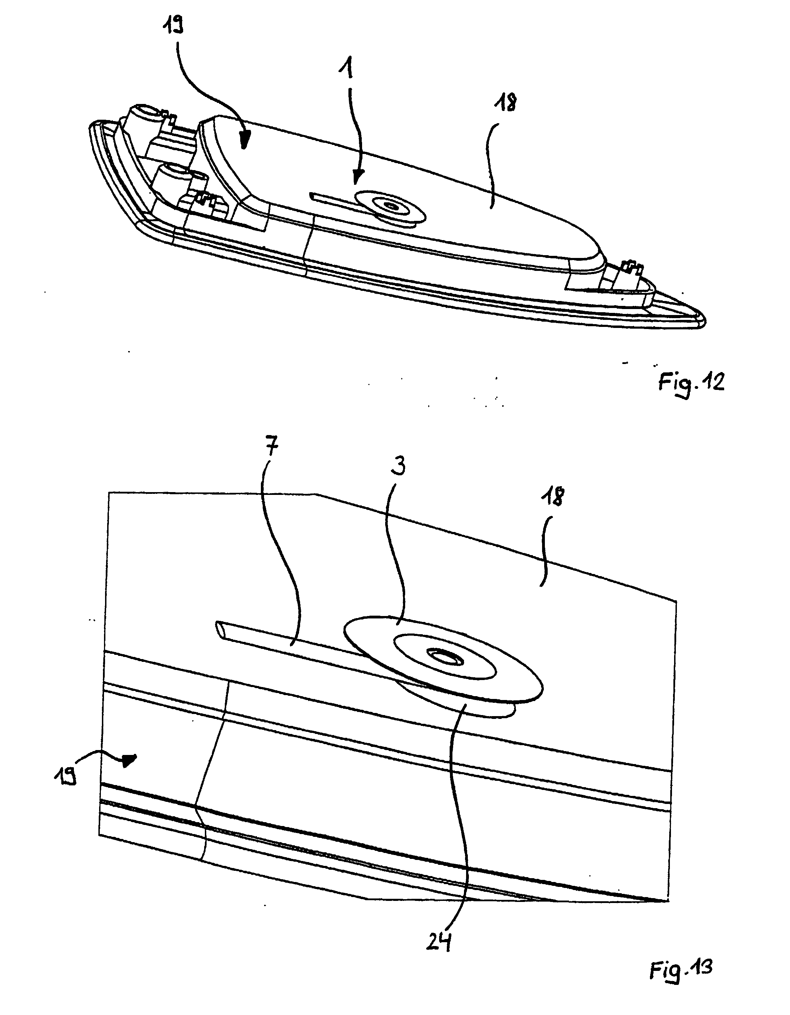

In den Fig. 10 und 11 ist dargestellt, wie das Durchflußelement 7 zumindest im Bereich des querschnittsveränderbaren Abschnitts 6 in die Oberseite 18 der Bügeleisensohle 19 eintritt. Dabei liegt das Durchflußelement 7 bzw. der querschnittsveränderbare Abschnitt 6 in einem Schlauchführungselement 21 ein, das nach Art einer Rinne ausgebildet ist. Das Schlauchführungselement 21 gewährleistet eine sichere und stabile Lage des Durchflußelementes 7, insbesondere bei der Betätigung der Ventilöffnung 2. Auf der Oberseite 18 der Bügeleisensohle 19 ist ein Abstützelement 20 vorgesehen, das der Abstützung des Randes 5 der Bimetallsprungscheibe 3 dient.

Bei der Ausführungsform gemäß den Figuren 12 und 13 weist das Trägerelement 4 bzw. die Oberseite 18 der Bügeleisensohle 19 eine Übergangselement 24 auf, in das das Durchflußelement 7 übergeht. Das Durchflußelement 7 ist einstückig mit den Übergangselement 24 ausgebildet. Das Übergangselement 24 weist ferner einen in den Zeichnungsfiguren nicht dargestellten in die Dampfkammer hineinreichenden Stutzen auf, der zur Befestigung und Wärmeübertragung vorgesehen ist.

Das Trägerelement 4 ist federnd so ausgebildet, daß es der Bewegung der Bimetallsprungscheibe 3 über einen gewissen Weg folgt. Der Vorteil ist, daß die Schließbewegung langhubiger wird und die Preßkräfte auf den Silikonschlauch abgedämpft werden.

Bei der Ausführungsform gemäß Fig. 11 ist die Bimetallsprungscheibe 3 unmittelbar thermisch angekoppelt auf einem wärmeübertragenen, domartigen Trägerelement 25 angeordnet. Das Trägerelement 25 steht direkt mit der beheizten Sohle 19 thermisch in Verbindung und durchsetzt die Oberseite 18 der Sohle 19.

## Patentansprüche

1. Thermisch gesteuerte Einrichtung (1) zur Betätigung einer Ventilöffnung (2), insbesondere eines Flüssigkeitsventils, insbesondere eines Drip-Stop-Ventils in einem Dampfbügeleisen, mit einer Bimetallsprungscheibe (3), die an einem Trägerelement (4) befestigt ist und deren Scheibenrand (5) oder Randbereich abhängig von der Wölbstellung der Bimetallsprungscheibe (3) die Ventilöffnung (2) schließt oder öffnet,
**dadurch gekennzeichnet, daß**
die Ventilöffnung (2) durch einen querschnittsveränderbaren Abschnitt (6) eines schlauch- oder rohrartigen Durchflußelementes (7) gebildet wird und der Rand (5) oder Randbereich der Bimetallsprungscheibe (3) den querschnittsveränderbaren Abschnitt (6) unmittelbar beaufschlagt.

2. Einrichtung nach Anspruch 1,
**dadurch gekennzeichnet, daß**
das Durchflußelement (7) durch einen dauerelastischen Schlauch oder ein dauerelastisches Formteil gebildet wird.

3. Einrichtung nach einem der vorhergehenden Ansprüche,
**dadurch gekennzeichnet, daß**
das Durchflußelement (7) zwischen der Bimetallsprungscheibe (3) und dem Trägerelement (4) verläuft.

4. Einrichtung nach einem der vorhergehenden Ansprüche,
**dadurch gekennzeichnet, daß**
das Trägerelement (4) aus einer Trägerplatte besteht, die im wesentlichen parallel zur Erstreckungsebene der Bimetallsprungscheibe (3) verläuft.

5. Einrichtung nach einem der vorhergehenden Ansprüche,
**dadurch gekennzeichnet, daß**
das Trägerelement in die Oberseite (18) der Sohle (19) eines Bügeleisens oder einer Dampfkammer integriert ist oder als Trägerelement die Oberseite (18) der Sohle (19) eines Bügeleisens oder einer Dampfkammer vorgesehen ist.

6. Einrichtung nach einem der vorhergehenden Ansprüche,
**dadurch gekennzeichnet, daß**
die Bimetallsprungscheibe (3) eine gratbehaftete (22) sowie eine gratfreie Seite (23) aufweist und mit der gratfreien Seite (23) das Durchflußelement (7) beaufschlagt.

7. Einrichtung nach einem der vorhergehenden Ansprüche,
**dadurch gekennzeichnet, daß**
das Zentrum (8) der Bimetallsprungscheibe (3) auf einem erhabenen Abschnitt des Trägerelementes (4) befestigt ist.

8. Einrichtung nach einem der vorhergehenden Ansprüche,
**dadurch gekennzeichnet, daß**
die Beaufschlagung des Durchflußelementes (7) durch den Rand (5) der Bimetallsprungscheibe (3) entlang von zwei Kreissegmenten erfolgt, wodurch mindestens zwei in Durchflußrichtung hintereinander liegende Dichtbereiche gebildet werden.

9. Einrichtung nach einem der vorhergehenden Ansprüche,
**dadurch gekennzeichnet, daß**
das Trägerelement (4) mindestens eine abstehende Rippe (17) zur unmittelbaren Beaufschlagung des querschnittsveränderbaren Abschnittes (6) aufweist, die mindestens eine Rippe (17) im wesentlichen parallel zum das Durchflußelement (7) beaufschlagenden Rand (5) der Bimetallsprungscheibe (3) angeordnet ist oder etwa dem Randverlauf der Bimetallsprungscheibe (3) folgt.

10. Einrichtung nach Anspruch 9,
**dadurch gekennzeichnet, daß**
die Rippen (17) bezogen auf den Rand (5) der Bimetallsprungscheibe (3) radial nach innen versetzt sind.

11. Einrichtung nach einem der vorhergehenden Ansprüche,
**dadurch gekennzeichnet, daß**
das Trägerelement (4) um den Rand (5) der Bimetallsprungscheibe (3) herumgebogen ist und das Durchflußelement (7) an die gebildete Abbiegung (11) des Trägerelements (4) angrenzt und die Lage des Durchflußelementes (7) durch die Abbiegung (11) einerseits und den erhabenen Abschnitt des Trägerelements (4) andererseits definiert ist.

12. Einrichtung nach einem der Ansprüche, 1 bis 8 und 11,
**dadurch gekennzeichnet, daß**
das Durchflußelement (7) zumindest im Bereich des querschnittsveränderbaren Abschnitts (6) in einem Schlauchführungselement (21) nach Art einer rinnenartigen Eindellung oder Einziehung oder Einkerbung einliegt.

13. Einrichtung nach Anspruch 12,
**dadurch gekennzeichnet, daß**
das Schlauchführungselement (21) mindestens eine Rippe (17) zur unmittelbaren Beaufschlagung des querschnittsveränderbaren Abschnitts (6) aufweist.

14. Einrichtung nach einem der vorhergehenden Ansprüche,
**dadurch gekennzeichnet, daß**
der dem Durchflußelement (7) gegenüberliegende Randbereich (12) der Bimetallsprungscheibe (3) abgestützt ist.

15. Einrichtung nach einem der vorhergehenden Ansprüche,
**dadurch gekennzeichnet, daß**
die Oberseite (18) der Bügeleisensohle (19) oder Dampfkammer mit einem gesonderten oder angeformten Abstützelement (20) zur Abstützung des Randes (5) oder Randbereiches versehen ist.

16. Einrichtung nach einem der vorhergehenden Ansprüche,
**dadurch gekennzeichnet, daß**
das Trägerelement (4) federnd so ausgebildet ist, daß es der Bewegung der Bimetallsprungscheibe (3) über einen gewissen Weg folgt.

17. Einrichtung nach einem der vorhergehenden Ansprüche,
**dadurch gekennzeichnet, daß**
der erhabene Abschnitt des Trägerelementes (4) durch eine Ausprägung (9) des Trägerelementes gebildet ist.

18. Einrichtung nach einem der vorhergehenden Ansprüche,
**dadurch gekennzeichnet, daß**
die Bimetallsprungscheibe (3) unmittelbar thermisch angekoppelt auf einem wärmeübertragenden Trägerelement (4, 25) angeordnet ist.

19. Einrichtung nach einem der vorhergehenden Ansprüche,
**dadurch gekennzeichnet, daß**
das Trägerelement (25) domartig ausgebildet ist.

20. Einrichtung nach einem der Ansprüche 18 oder 19,
**dadurch gekennzeichnet, daß**
das Trägerelement (25) direkt mit der beheizten Sohle (19) bzw. der Dampfkammer thermisch in Verbindung steht und die Oberseite (18) der Sohle (19) bzw. Dampfkammer durchsetzt.

## Claims

1. Thermally controlled apparatus (1) for actuating a valve opening (2), more especially a valve for liquids, more especially a drip-stop valve in a steam iron, said apparatus having a bimetallic spring disc (3) which is mounted on a support member (4), and the disc edge (5) or edge region of said bimetallic spring disc (3) closes or opens the valve opening (2), in dependence on the arched position of the bimetallic spring disc (3), **characterised in that** the valve opening (2) is formed by a cross-sectionally variable portion (6) of a hose-like or tubular throughflow member (7), and the edge (5) or edge region of the bimetallic spring disc (3) acts directly upon the cross-sectionally variable portion (6).

2. Apparatus according to claim 1, **characterised in that** the throughflow member (7) is formed by a permanently resilient hose or a permanently resilient shaped part.

3. Apparatus according to one of the preceding claims, **characterised in that** the throughflow member (7) extends between the bimetallic spring disc (3) and the support member (4).

4. Apparatus according to one of the preceding claims, **characterised in that** the support member (4) comprises a support plate which extends substantially parallel to the extension plane of the bimetallic spring disc (3).

5. Apparatus according to one of the preceding claims, **characterised in that** the support member is incorporated in the upper side (18) of the base (19) of an iron or of a steam chamber, or the upper side (18) of the base (19) of an iron or of a steam chamber is provided as the support member.

6. Apparatus according to one of the preceding claims, **characterised in that** the bimetallic spring disc (3) has a burr-afflicted side (22) as well as a burr-free side (23) and acts upon the throughflow member (7) with the burr-free side (23).

7. Apparatus according to one of the preceding claims, **characterised in that** the centre (8) of the bimetallic spring disc (3) is mounted on a raised portion of the support member (4).

8. Apparatus according to one of the preceding claims, **characterised in that** the throughflow member (7) is acted-upon by the edge (5) of the bimetallic spring disc (3) along two circular segments, by means of which at least two sealing regions, situated behind each other when viewed with respect to the throughflow direction, are formed.

9. Apparatus according to one of the preceding claims, **characterised in that** the support member (4) has at least one protruding rib (17) for directly acting-upon the cross-sectionally variable portion (6), and the at least one rib (17) is disposed substantially parallel to the edge (5) of the bimetallic spring disc (3) acting upon the throughflow member (7) or approximately follows the edge configuration of the bimetallic spring disc (3).

10. Apparatus according to claim 9, **characterised in that** the ribs (17) are offset radially inwardly relative to the edge (5) of the bimetallic spring disc (3).

11. Apparatus according to one of the preceding claims, **characterised in that** the support member (4) is bent around the edge (5) of the bimetallic spring disc (3), and the throughflow member (7) abuts against the formed bent portion (11) of the support member (4), and the position of the throughflow member (7) is defined by the bent portion (11), on the one hand, and by the raised portion of the support member (4), on the other hand.

12. Apparatus according to one of claims 1 to 8 and 11, **characterised in that** the throughflow member (7), at least in the region of the cross-sectionally variable portion (6), lies in a hose guiding member (21) in the manner of a groove-like depression or recess or notch.

13. Apparatus according to claim 12, **characterised in that** the hose guiding member (21) has at least one rib (17) for directly acting upon the cross-sectionally variable portion (6).

14. Apparatus according to one of the preceding claims, **characterised in that** the edge region (12) of the bimetallic spring disc (3), situated opposite the throughflow member (7), is supported.

15. Apparatus according to one of the preceding claims, **characterised in that** the upper side (18) of the iron base (19) or steam chamber is provided with a separate or moulded-on support member (20) for supporting the edge (5) or edge region.

16. Apparatus according to one of the preceding claims, **characterised in that** the support member (4) has such a resilient configuration that it follows the movement of the bimetallic spring disc (3) for a certain distance.

17. Apparatus according to one of the preceding claims, **characterised in that** the raised portion of the support member (4) is formed by a stamped-out portion (9) of the support member.

18. Apparatus according to one of the preceding claims, **characterised in that** the bimetallic spring disc (3) is disposed on a heat-transmitting support member (4, 25) in a directly thermally connected manner.

19. Apparatus according to one of the preceding claims, **characterised in that** the support member (25) has a dome-like configuration.

20. Apparatus according to one of claims 18 or 19, **characterised in that** the support member (25) is in direct thermal communication with the heated base (19), or respectively with the steam chamber, and traverses the upper side (18) of the base (19) or steam chamber respectively.

## Revendications

1. Dispositif (1) commandé thermiquement pour l'actionnement de l'ouverture d'une vanne (2), en particulier d'une vanne pour liquides, en particulier d'une vanne stop-goutte ou Drip-Stop dans un fer à repasser à vapeur, avec un disque bimétallique à détente brusque (3), qui est fixé sur un élément porteur (4), et dont le bord de disque (5) ou la zone de bordure ouvre ou ferme l'ouverture de la vanne (2) en fonction de la situation de bombement du disque bimétallique à détente brusque (3),
**caractérisé en ce que**
l'ouverture de la vanne (2) est formée par une partie de section variable (6) d'un élément de passage de l'écoulement (7) en forme de tuyau ou de conduit et **en ce que** le bord (5) ou la zone de bordure du disque bimétallique à détente brusque (3) agit directement sur la partie de section variable (6).

2. Dispositif selon la revendication 1,
**caractérisé en ce que**
l'élément de passage de l'écoulement (7) est constitué par un tuyau ou flexible à élasticité permanente ou par une pièce de forme ou moulée à élasticité permanente.

3. Dispositif selon l'une quelconque des revendications précédentes,
**caractérisé en ce que**
l'élément de passage de l'écoulement (7) s'étend entre le disque bimétallique à détente brusque (3) et l'élément porteur (4).

4. Dispositif selon l'une quelconque des revendications précédentes,
**caractérisé en ce que**
l'élément porteur (4) consiste en une plaque support qui s'étend essentiellement parallèlement au plan d'extension du disque bimétallique à détente brusque (3).

5. Dispositif selon l'une quelconque des revendications précédentes,
**caractérisé en ce que**
l'élément porteur est intégré dans la face supérieure (18) de la semelle (19) d'un fer à repasser ou d'une chambre à vapeur ou **en ce que** la face supérieure (18) de la semelle (19) d'un fer à repasser ou d'une chambre à vapeur est prévue comme élément porteur.

6. Dispositif selon l'une quelconque des revendications précédentes,
**caractérisé en ce que**
le disque bimétallique à détente brusque (3) comporte une face pourvue de barbes ou d'arêtes (22) ainsi qu'une face dépourvue de barbes ou d'arêtes (23) et agit sur l'élément de passage de l'écoulement (7) par la face dépourvue de barbes (23).

7. Dispositif selon l'une quelconque des revendications précédentes,
**caractérisé en ce que**
le centre (8) du disque bimétallique à détente brusque (3) est fixé sur une section saillante de l'élément porteur (4).

8. Dispositif selon l'une quelconque des revendications précédentes,
**caractérisé en ce que**
l'actionnement de l'élément de passage de l'écoulement (7) par le bord (5) du disque bimétallique à détente brusque (3) s'effectue le long de deux segments circulaires, moyennant quoi au moins deux zones d'étanchement se trouvant dans le sens de l'écoulement l'une derrière l'autre sont formées.

9. Dispositif selon l'une quelconque des revendications précédentes,
**caractérisé en ce que**
l'élément porteur (4) comporte au moins une nervure saillante (17) pour l'actionnement direct de la partie de section variable (6), **en ce que** la au moins une nervure (17) est disposée essentiellement parallèlement au bord (5) actionnant l'élément de passage de l'écoulement (7) du disque bimétallique à détente brusque (3) ou suit à peu près le tracé du bord du disque bimétallique à détente brusque (3).

10. Dispositif selon la revendication 9,
**caractérisé en ce que**
les nervures (17) sont décalés radialement vers l'intérieur par rapport au bord (5) du disque bimétallique à détente brusque (3).

11. Dispositif selon l'une quelconque des revendications précédentes,
**caractérisé en ce que**
l'élément porteur (4) est cintré autour du bord (5) du disque bimétallique à détente brusque (3), **en ce que** l'élément de passage de l'écoulement (7) jouxte la partie cintrée (11) de l'élément porteur (4) et **en ce que** la position de l'élément de passage de l'écoulement (7) est définie par la partie cintrée (11) d'un côté et par la section saillante de l'élément porteur (4) de l'autre côté.

12. Dispositif selon l'une quelconque des revendications 1 à 8 et 11,
**caractérisé en ce que**
l'élément de passage de l'écoulement (7) repose au moins dans la zone de la partie de section variable (6) dans un élément de guidage de flexible ou tuyau (21) du genre creux, ou dépression ou entaille en forme de gouttière.

13. Dispositif selon la revendication 12,
**caractérisé en ce que**
l'élément de guidage de flexible (21) comporte au moins une nervure (17) pour l'actionnement direct de la partie de section variable (6).

14. Dispositif selon l'une quelconque des revendications précédentes,
**caractérisé en ce que**
la zone de bordure (12) du disque bimétallique à détente brusque (3) opposée à l'élément de passage de l'écoulement (7) est étayée.

15. Dispositif selon l'une quelconque des revendications précédentes,
**caractérisé en ce que**
la face supérieure (18) de la semelle du fer à repasser (19) ou de la chambre de vapeur est dotée d'un élément d'appui (20) séparé ou venu de moulage, pour étayer le bord (5) ou la zone du bord.

16. Dispositif selon l'une quelconque des revendications précédentes,
**caractérisé en ce que**
l'élément porteur (4) est configuré avec une élasticité telle qu'il suit sur une certaine course les mouvements du disque bimétallique à détente brusque (3).

17. Dispositif selon l'une quelconque des revendications précédentes,
**caractérisé en ce que**
la section en saillie de l'élément porteur (4) est formée par un matriçage (9) de l'élément porteur.

18. Dispositif selon l'une quelconque des revendications précédentes,
**caractérisé en ce que**
le disque bimétallique à détente brusque (3) est disposé sur un élément porteur (4, 25) transmetteur de chaleur, directement couplé thermiquement.

19. Dispositif selon l'une quelconque des revendications précédentes,
**caractérisé en ce que**
l'élément porteur (25) est configuré en forme de dôme.

20. Dispositif selon l'une des revendications 18 ou 19,
**caractérisé en ce que**
l'élément porteur (25) se trouve directement en communication thermique avec la semelle chauffée (19), respectivement avec la chambre à vapeur, et traverse la face supérieure (18) de la semelle (19), respectivement de la chambre à vapeur.
